Europäisches Patentamt

European Patent Office

Office européen des brevets

(19)

(11) EP 0 793 098 A1

(12) **EUROPEAN PATENT APPLICATION**
published in accordance with Art. 158(3) EPC

(43) Date of publication:
03.09.1997 Bulletin 1997/36

(51) Int. Cl.$^6$: **G01N 27/447**, G01N 21/59,
G01N 21/64

(21) Application number: 96930415.3

(22) Date of filing: 13.09.1996

(86) International application number:
PCT/JP96/02650

(87) International publication number:
WO 97/11362 (27.03.1997 Gazette 1997/14)

(84) Designated Contracting States:
AT BE CH DE DK ES FI FR GB GR IE IT LI LU MC
NL PT SE

(30) Priority: 18.09.1995 JP 238836/95

(71) Applicant:
OTSUKA PHARMACEUTICAL CO., LTD.
Chiyoda-ku Tokyo 101 (JP)

(72) Inventors:
• FUNATO, Masayoshi
Osaka 573-01 (JP)

• NAGASHIMA, Taku
Osaka 573 (JP)

(74) Representative:
Ritter und Edler von Fischern, Bernhard, Dipl.-
Ing. et al
Hoffmann Eitle,
Patent- und Rechtsanwälte,
Arabellastrasse 4
81925 München (DE)

(54) **MULTI-CAPILLARY ELECTROPHORETIC APPARATUS**

(57) By using a plurality of light emitting parts, lights driven by different electric signal components are applied to the respective light transmitting parts of the plurality of capillaries. Lights passed through the light transmitting parts are focused to a certain point. When the focused light is detected, the respective electric signal components included in the detected signal are separated. Consequently, a plurality of samples can be analyzed by arranging a plurality of capillaries in parallel.

FIG. 2

EP 0 793 098 A1

## Description

### TECHNICAL FIELD

The present invention relates to a multicapillary electrophoretic device capable of analyzing a plurality of samples at the same time by arranging a plurality of capillaries, which are glass fine tubes, in parallel.

### BACKGROUND ART

A capillary electrophoretic device is a device for separating a sample component by filling an electrophoretic solvent in a capillary and charging a solution containing the sample component dissolved therein from one end of the capillary with imparting a potential gradient along the capillary. An object of the measurement of the capillary electrophoretic device ranges over various fields such as ions, biopolymers, biomonomers, chemicals, compounds and the like.

The capillary electrophoretic device comprises a light detector for detecting an intensity distribution of a fluorescent image or an absorbed light image of a sample component by applying light to a part of the sample component during electrophoresis. Consequently, a distribution state during the movement of the sample component in the capillary is detected at a high resolution so that the presence of the sample component and the concentration thereof can be determined on the basis of the distribution state.

By the way, the realization of an increase in processing speed and an increase in processing amount of the capillary electrophoretic device have recently been required.

Therefore, the prior art proposes a construction wherein a plurality of capillaries are arranged in a row and light is applied to the respective capillaries from one end in an arrangement direction, and then the applied lights from the respective capillaries are detected with a light receiving device provided in one to one correspondence on each capillary (Japanese Utility Model Publication No. 7-20591 (B)). Consequently, a plurality of analysis processings can be carried out, simultaneously, with a relatively simple construction, thereby shortening the processing time.

In the technique described in the aforementioned publication, it is necessary to provide the light receiving device corresponding to each capillary. Actually, a sensitivity varies with each light receiving device and a gain of an electric processing circuit also vary so that an adjustment work is required to correct the sensitivity and gain in the circuit.

Furthermore, there is also a problem that a large number of light receiving elements must be arranged and the size of the detection part can not be reduced.

### DISCLOSURE OF THE INVENTION

An object of the invention is to provide a multicapillary electrophoretic device, which has no room for causing a scatter in sensitivity of the light receiving device and a scatter in gain of the electric processing circuit and which can reduce the size of the detection part.

The multicapillary electrophoretic device of the present invention, for accomplishing the aforementioned object, comprises a plurality of capillaries having light transmitting parts held in parallel, a plurality of light emitting parts for applying lights to the respective light transmitting parts of the aforementioned plurality of the capillaries, a light emitting driving part for driving the aforementioned plurality of light emitting parts by different electric signal components, a light focusing part for focusing lights passed through the aforementioned light transmitting parts to a certain point, a light detection part for detecting the focused light, a signal processing part for separating the respective electric signal components included in an electric signal detected by the aforementioned light detection part, and a voltage application part for applying a voltage to the aforementioned capillaries (claim 1).

According to such the construction, lights emitted and driven by different electric signal components can be applied to the respective light transmitting parts of the capillaries.

On the other hand, when the sample component is subjected to electrophoresis by filling an electrophoretic solvent in a capillary and charging a solution containing the sample component dissolved therein from one end of the capillary with imparting a potential gradient along the capillary, light intensity attenuation corresponding to a fluorescent image and an absorbed light image of the sample component is generated in the respective light transmitting parts.

Then, lights passed through the aforementioned light transmitting parts are focused to a certain point. As means for focusing lights passed through the light transmitting parts to a certain point, an optical fiber bundle may be' used. Furthermore, the focused light is detected and the respective electric signal components included in the detected signal are separated. Therefore, it is possible to individually determine the attenuation amount of the intensity of light whose intensity is focused by passing through the light transmitting parts of the respective capillaries.

Accordingly, it is possible to determine the attenuation amount of the light intensity of the respective capillaries only by preparing one light detection part even if the plurality of capillaries is not provided with the light detection part.

Accordingly, as in a conventional case where a light receiving device is provided corresponding to the respective capillaries and an electric circuit is provided, there is no room for causing a scatter in sensitivity of the light receiving element and a scatter in gain of the light receiving processing circuit. Therefore, an adjustment work can be facilitated.

Furthermore, it is not necessary to arrange a large number of light receiving parts and the size of the detection part can be reduced.

Incidentally, it is preferred that the electric signal generated in the aforementioned light emitting driving part is a signal constituted of a system of mutually orthogonal functions so that the electric signal can be separated by the aforementioned signal processing part (claim 2).

This "system of mutually orthogonal functions" refers to any known system of orthogonal functions, and examples thereof include system of sinusoidal functions having different frequencies, and system of pulse functions having different shapes. One embodiment of the system of pulse functions include system of pulse functions wherein repeated frequencies are in a relation of even number times to each other (see FIG. 6). Furthermore, a system of pulse orthogonal functions made from each column (each row) of the Hadamard matrix is also famous (see FIG. 7). Furthermore, a time-divison system of pulse functions can also be used (see FIG. 8).

With respect to a signal constituted of a system of functions wherein electric signals generated in the light emitting driving part are mutually orthogonal, an influence of the signal of the other multicapillary can be reduced to 0, in principle. Therefore, there is no fear of cross talk. Thus, the reliability of the measurement can be increased.

The aforementioned signal processing part may include a synchronic rectifying circuit for separating the respective electric signals (claim 3).

Furthermore, the electric signals generated at the aforementioned light emitting driving part are sinusoidal signals having different frequencies, and the signal processing part includes a frequency filter circuit for separating the respective frequency components (claim 4).

An optical modulating part for modulating lights from the plurality of light emitting parts with different electric signal components may be provided in place of the aforementioned light emitting driving part (claim 5).

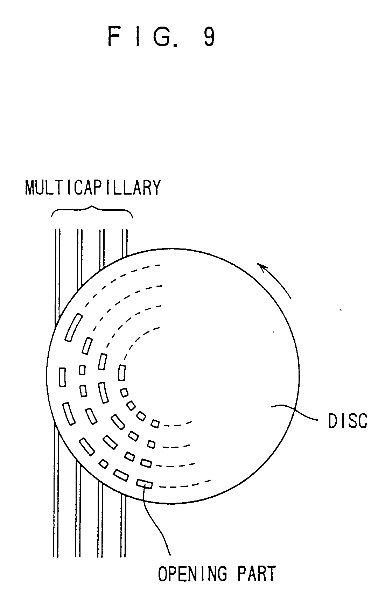

For example, lights from the respective light emitting parts may be modulated by using an optical shutter comprising an electro-optical device, a liquid crystal device, etc. As shown in FIG. 9, a mechanical chopping may be carried out by using a disc provided with a plurality of openings in the row corresponding to the number of capillaries so as to represent pulse functions of different systems.

The aforementioned object as well as other objects of the present invention will be apparent with reference to the accompanying drawings.

BRIEF DESCRIPTION OF THE DRAWINGS

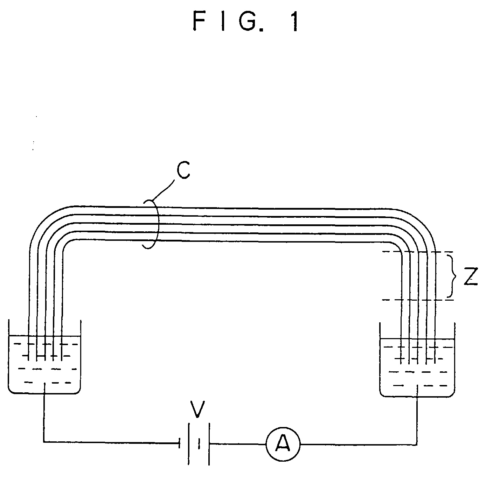

FIG. 1 is a diagram showing a measurement system according to a multicapillary electrophoretic method.

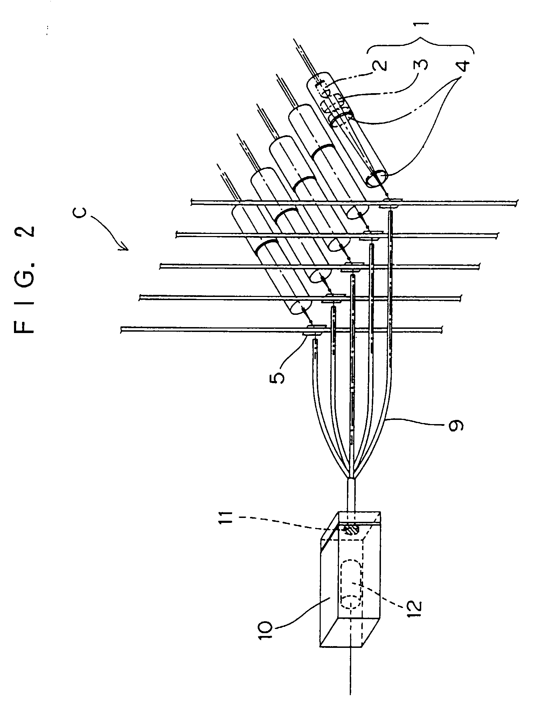

FIG. 2 is a diagram showing a construction of the present invention, wherein a fluorescent image or an absorbed light image from a measurement zone of multicapillaries illuminated by a plurality of LED light sources is collected on one detector through an optical fiber bundle.

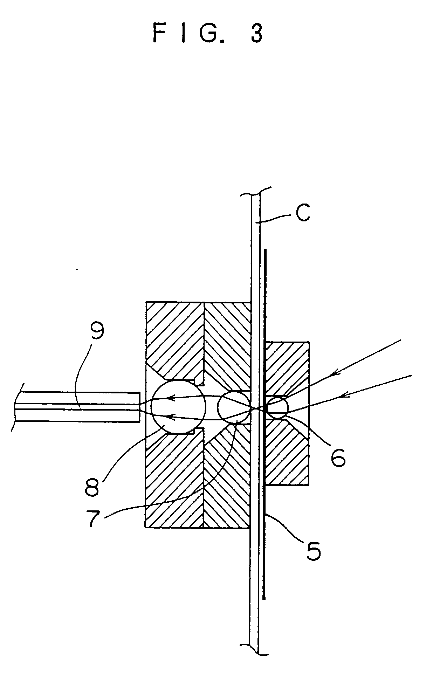

FIG. 3 is a cross section showing a construction of a light collection system wherein lights of LED light sources are collected onto a measurement zone of multicapillaries and a fluorescent light image or an absorbed light emitted from the measurement zone is lead to an optical fiber.

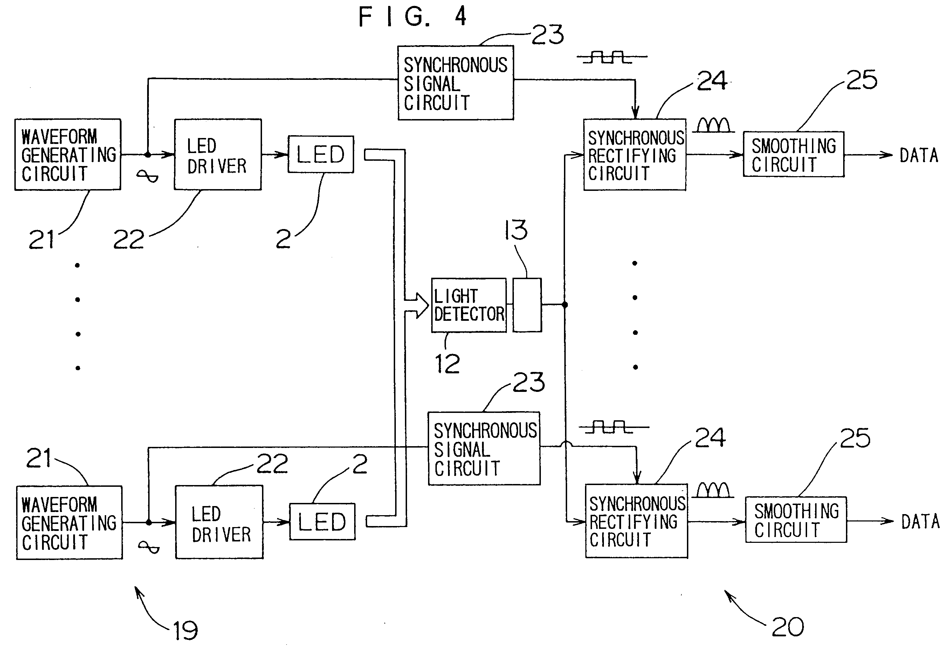

FIG. 4 is a circuit block diagram showing a light emitting driving part for supplying a light emitting driving signal to LED and a signal processing part for processing a detection signal of a light detector according to one embodiment of the present invention.

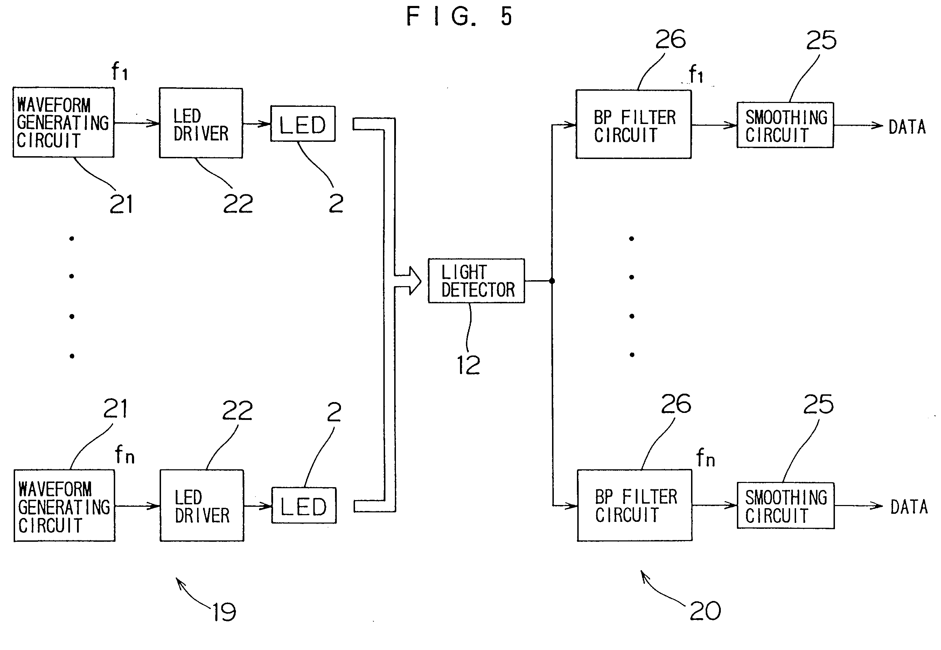

FIG. 5 is a circuit block diagram showing a light emitting driving part for supplying a light emitting driving signal to LED and a signal processing part for processing a detection signal of a light detector according to another embodiment.

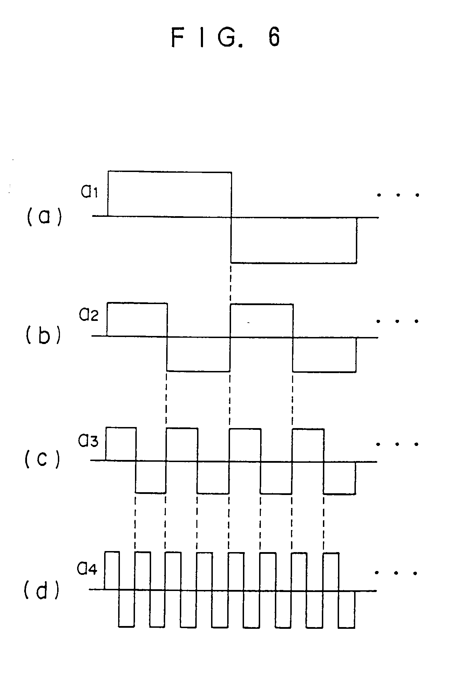

FIG. 6 is a waveform diagram showing a system of pulse functions wherein repeated frequencies are in a relation of even number times to each other as one embodiment of the system of orthogonal functions.

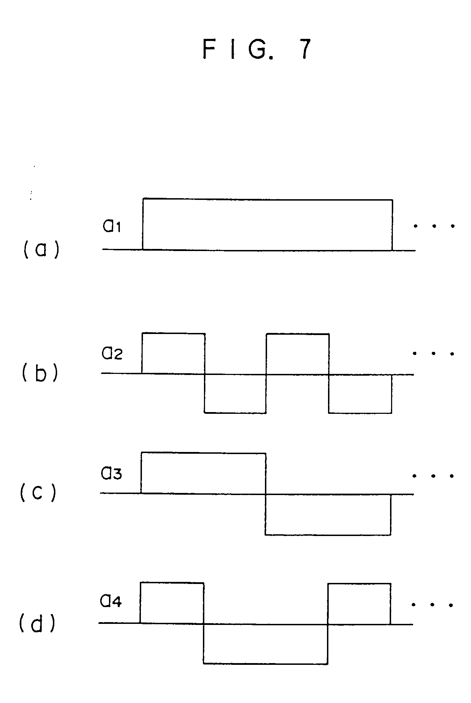

FIG. 7 is a waveform diagram showing a system of pulse functions as another embodiment of the system of orthogonal functions.

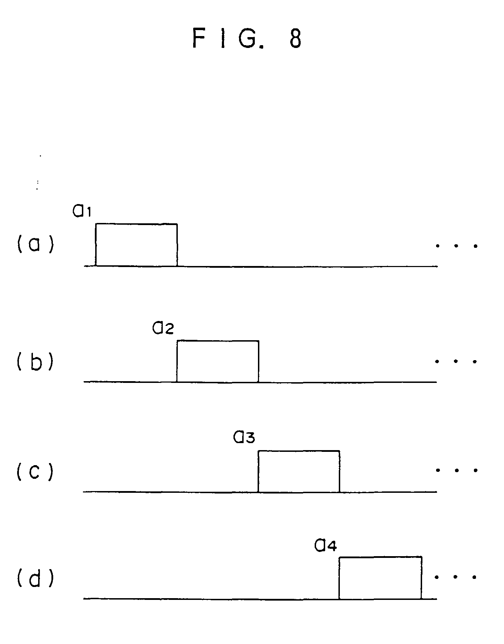

FIG. 8 is a waveform diagram showing a time-division system of pulse functions as another embodiment of the system of orthogonal functions.

FIG. 9 is a diagram showing an embodiment of making a function system by carrying out a mechanical chopping using a disc provided with opening rows in multiple stages.

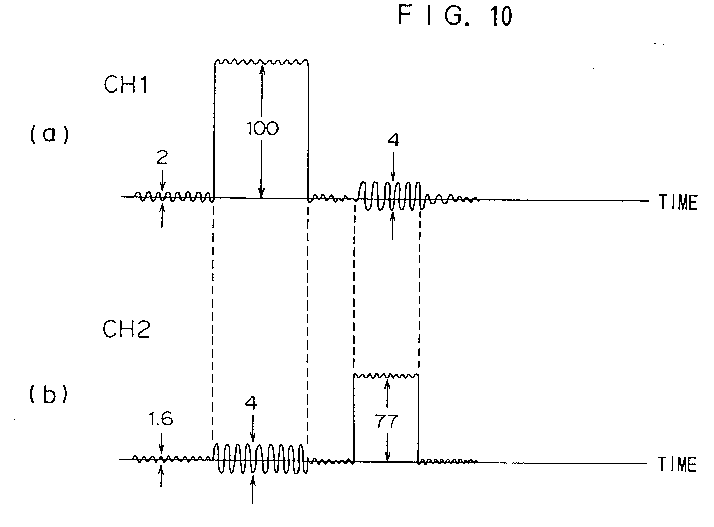

FIG. 10 is a graph showing the measurement results in the case where an intensity of a detection signal is measured by using a measurement system according to a multicapillary electrophoretic method of the present invention. FIG. 10(a) is a graph showing the measurement results in channel 1 and FIG. 10(b) is a graph showing measurement results in channel 2.

BEST MODE FOR CARRYING OUT THE INVENTION

The mode for carrying out the present invention will be explained in detail with reference to the accompanying drawings.

FIG. 1 is a diagram showing a measurement system according to a multicapillary electrophoretic method, wherein a sample solution is charged into multicapillaries C made of molten quartz and a high voltage is applied to both ends of the multicapillaries. In the vicinity of the terminal of the multicapillaries C, a measurement zone Z to which light is applied is present. The intensity distribution of the fluorescent light image and absorbed light image of the sample component generated in the zone Z is detected with the light detector, and the distribution is realized in the signal processing part. Incidentally, an ammeter A is provided for monitoring the intermission of a current caused by the generation of foams in the multicapillaries C.

FIG. 2 is an enlarged diagram showing a plurality of light emitting parts 1 for applying lights to the multicapillaries C and a light detector 10. The plurality of light emitting parts 1 comprise a blue LED 2, a dielectric multi-layer film band-path filter 3 for extracting only light having a predetermined wavelength, and a focusing lens 4 for focusing light to the measurement zone Z. Incidentally, the light emitting device is not limited to the blue LED, and any light emitting device such as LED of other color, laser diode, etc. can be used.

FIG. 3 is a cross section showing a construction in the vicinity of a light focusing part of capillaries C. The construction comprises a ball lens 6 for focusing lights emitted from the light emitting parts 1, a slit 5 for shielding excess light, and two ball lenses 7 and 8 for introducing light which goes out through the center of the capillaries C into a light focusing fiber 9.

The light introduced into the aforementioned light focusing fiber 9 is bundled as shown in FIG. 2, and then incident on the light detection part 10 as shown in FIG. 2. The light detection part 10 is provided with a sharp cut-off filter 11 for extracting only light having a predetermined wavelength, and a light detector 12. As the light detector 12, a photomultiplier and a PIN photodiode can be used.

FIG. 4 shows a light emitting driving part 19 for supplying a light emitting driving signal to the LED 2, and a signal processing part 20 for processing a detection signal of the light detector 12.

The light emitting driving part 19 is composed of a waveform generating circuit 21 and a LED driver 22. Each waveform generating circuit 21 generates sinusoidal signals having different frequencies, and the LED driver 22 emits and drive the LED 2 on the basis of this sinusoidal signal.

The light detection signal which has passed through the respective multicapillaries (referred to as a "channel") and input to the light detector 12 is converted into an electric signal. On this electric signal, a number of sinusoidal waves are overlapped. The electric signal is input to a synchronous rectifying circuit 24 after passing through the DC cut filter 13. On the other hand, a rectangular wave signal having the same frequency as the sinusoidal wave signal generated by the waveform generating circuit 21 is formed at a synchronous signal circuit 23, and then input to the synchronous rectifying circuit 24. The synchronous rectifying circuit 24 is specifically a multiplier, and a product of the aforementioned electric signal and the rectangular wave signal generated at the synchronous signal circuit 23 is taken. As a consequence, only the signal component generated at the channel waveform generating circuit 21 can be extracted. This output signal is smoothed at a smoothing circuit 25, and then output as measurement data.

By using the aforementioned function, only the signal component of each channel can be separated and extracted from the smoothing circuit 25.

Incidentally, the signal processing part 20 for processing the electric signal of the light detector 12 is not limited to the aforementioned circuit shown in FIG. 4. In the aforementioned circuit shown in FIG. 4, the synchronous signal rectifying circuit 24 of the multiplier is used, but a band path filter circuit 26 corresponding to sinusoidal signals having different frequencies generated at each waveform generating circuit 21 may be used, as shown in FIG. 5. Consequently, only the signal of corresponding frequency can be separated and then extracted.

In the aforementioned embodiment, sinusoidal signals having different frequencies are generated at each waveform generating circuit 21, but the waveform of the signal is not limited thereto. In place of the sinusoidal signal, a rectangular wave signal may be used.

It is preferred that the signals generated at each waveform generating circuit 21 are mutually orthogonal. That is, when each signal is denoted by a symbol $a_i$ (i = 1, 2, 3 ....), signals are multiplied to each other to carry out an integration for a certain period of time, the following equations are preferably satisfied in order to alleviate a disturbance from other channel signals.

$$\int a_i{}^2 dt = 1$$

$$\int a_i a_j dt = 0 \ (i \neq j)$$

As the system of mutually orthogonal functions, in addition to the aforementioned sinusoidal signals having different frequencies, as shown in FIG. 6, a system of pulse functions wherein repeated frequencies are in a relation of even number times to each other (e.g. 1kHz, 2kHz, 4kHz, 8kHz ...) may be used. A system of pulse functions of binary codes 1 and -1, as shown in FIG. 7, may be used. Furthermore, a time-division system of pulse functions, as shown in FIG. 8, may be used.

Furthermore, in the aforementioned embodiment, the signal was generated at the stage of the light emitting driving part 19 for driving the LED 2. However lights emitted from the LED 2 at a certain light intensity may be modulated with different electric signal components.

For example, lights from the respective light emitting parts may be modulated by using an optical shutter comprising an electro-optical device, a liquid crystal device, etc. As shown in FIG. 9, a mechanical chopping may be carried out by using a disc provided with a plurality of openings in the row corresponding to the number of capillaries so as to represent pulse functions of different systems.

Then, by using a measurement system (FIG. 1 to FIG. 4) according to the aforementioned multicapillary electrophoretic method and using an aqueous fluorescein solution as a sample, the intensity of the detection signal was measured. However, in order to see the waveform of the signal, the measurement was carried out after removing the smoothing circuit 25 shown in FIG. 4.

In case of the initiation of the measurement, the one vessel was filled with water while the other vessel was closed and sucked using a pump, and then multicapillaries C were filled with water. Fluorescein solution ($5 \times 10^{-7}$ mol) was charged from one end of the multicapillaries C to subject the sample component to electrophoresis.

The number of capillaries C was set to 2 and LEDs were emitted and driven, respectively, by using a sinusoidal wave of 4 kHz in one channel (referred to as "channel 1") and a sinusoidal wave of 2 kHz in the other channel (referred to as "channel 2").

Since a change of the aforementioned sinusoidal wave with time is sufficiently shorter than a change of the intensity with time of the fluorescent light image and absorbed light image (normally in an order of seconds), an influence of the change of the intensity with time of the fluorescent light image and absorbed light image exerted on the signal processing part 20 may be ignored.

An output of a photo-multiplier PMT at the channel 1 and channel 2 was measured with the passage of time.

FIG. 10(a) is a graph showing the results obtained by measuring at the channel 1, and FIG. 10(b) is a graph showing the results obtained by measuring at the channel 2. The unit of numerals is milli-volt (p-p value).

At the channel 1, when the multicapillaries C are filled with water, the measurement signal does not appear and only noises (2 mV) generated at the light emitting driving part 19 and signal processing part 20 appear. At the channel 2, when the multicapillaries C are filled with only water, the measurement signal does not appear and only noises (1.6 mV) generated in the light emitting driving part 19 and signal processing part 20 appear. It is considered that the difference between this "2" and "1.6" is caused by a difference in light emitting intensity of LED 2 and a difference in amplification degree of the electric circuit.

When the sample component is subjected to electrophoresis in the channel 1, a large signal (100mV) appears in the channel 1. At this time, the noise component in the channel 2 increases to 4mV. That is, a cross talk (interference) having an amplitude of 4 with respect to the amplitude of 100 is generated. This cross talk value is -28dB and is a sufficiently small value.

When the sample component in the channel 1 has passed away and the sample component is subjected to electrophoresis at the channel 2, a large signal (77mV) appears in the channel 2. At this time, the cross talk amount is -26dB and this is a sufficiently small value.

Incidentally, in the circuit used in the measurement, the smoothing circuit 25 is removed. It is assumed that the cross talk amount can be further reduced by providing a smoothing circuit 25 having an actually optimized time constant.

As described above, when the multicapillary electrophoretic device of the present invention is used, the respective signal components can be separated after lights passed through the respective channels are focused to a certain point and detected at a single light detection part. Therefore, the signal component which appears in the corresponding channel can be measured without being affected by other channels.

## Claims

1. A multicapillary electrophoretic device comprising a plurality of capillaries having light transmitting parts held in parallel, a plurality of light emitting parts for applying lights to the respective light transmitting parts of the plurality of capillaries, a light emitting driving part for driving the plurality of light emitting parts by different electric signal components, a light focusing part for focusing lights passed through the light transmitting parts to a certain point, a light detection part for detecting the focused light, a signal processing part for separating the respective electric signal components included in an electric signal detected by the light detection part, and a voltage application part for applying a voltage to the capillaries.

2. The multicapillary electrophoretic device according to claim 1, wherein the electric signal generated in the light emitting driving part is a signal constituted of a system of mutually orthogonal functions so that the electric signal can be separated by the signal processing part.

3. The multicapillary electrophoretic device according to claim 1, wherein the signal processing part includes a synchronic rectifying circuit for separating the respective electric signals.

4. The multicapillary electrophoretic device according to claim 1, wherein the electric signals generated at the light emitting driving part are sinusoidal signals having different frequencies, and the signal processing part includes a frequency filter circuit for separating the respective frequency components.

5. The multicapillary electrophoretic device according to claim 1, comprising, in place of the light emitting driving part, an optical modulating part for modulating lights from the plurality of light emitting parts with different electric signal components.

F I G. 1

FIG. 2

# F I G. 3

# F I G. 4

F I G. 5

Figure 5: Block diagram. Transmitter side (19): WAVEFORM GENERATING CIRCUIT (21, $f_1$) → LED DRIVER (22) → LED (2) ... WAVEFORM GENERATING CIRCUIT (21, $f_n$) → LED DRIVER (22) → LED (2). Light from LEDs → LIGHT DETECTOR (12). Receiver side (20): BP FILTER CIRCUIT (26, $f_1$) → SMOOTHING CIRCUIT (25) → DATA ... BP FILTER CIRCUIT (26, $f_n$) → SMOOTHING CIRCUIT (25) → DATA.

# F I G. 6

(a) $a_1$ ...

(b) $a_2$ ...

(c) $a_3$ ...

(d) $a_4$ ...

F I G. 7

(a) a₁

(b) a₂

(c) a₃

(d) a₄

F I G. 8

(a) $a_1$ ...

(b) $a_2$ ...

(c) $a_3$ ...

(d) $a_4$ ...

# FIG. 9

MULTICAPILLARY

DISC

OPENING PART

F I G. 10

EP 0 793 098 A1

**INTERNATIONAL SEARCH REPORT**

| | International application No. |
|---|---|
| | PCT/JP96/02650 |

**A. CLASSIFICATION OF SUBJECT MATTER**

Int. Cl$^6$ G01N27/447, 21/59, 21/64

According to International Patent Classification (IPC) or to both national classification and IPC

**B. FIELDS SEARCHED**

Minimum documentation searched (classification system followed by classification symbols)

Int. Cl$^6$ G01N27/447-27/453, G01N21/17-21/39, 21/59-21/64

Documentation searched other than minimum documentation to the extent that such documents are included in the fields searched

Jitsuyo Shinan Koho      1926 - 1996
Kokai Jitsuyo Shinan Koho   1971 - 1996
Toroku Jitsuyo Shinan Koho   1994 - 1996

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 53-51797, A (Shimadzu Corp.), May 11, 1978 (11. 05. 78)(Family: none) | 1 - 5 |
| A | JP, 4-233840, A (Shimadzu Corp.), August 21, 1992 (21. 08. 92)(Family: none) | 1 - 5 |
| A | JP, 5-79469, U (Shimadzu Corp.), October 29, 1993 (29. 10. 93)(Family: none) | 1 - 5 |
| A | JP, 5-93711, A (Hitachi, Ltd.), April 16, 1993 (16. 04. 93) & DE, 4139211, A & US, 5192412, A | 1 - 5 |

☐ Further documents are listed in the continuation of Box C.    ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| November 7, 1996 (07. 11. 96) | November 19, 1996 (19. 11. 96) |

| Name and mailing address of the ISA/ | Authorized officer |
|---|---|
| Japanese Patent Office | |
| Facsimile No. | Telephone No. |

Form PCT/ISA/210 (second sheet) (July 1992)